# FASCICULE DE BREVET EUROPEEN

(11) **EP 2 684 687 B1**
(45) Date de publication et mention de la délivrance du brevet: **21.01.2015**
(21) Numéro de dépôt: 13354025.2
(22) Date de dépôt: 05.07.2013
(51) Int. Cl.: B32B 15/00, B62D 33/00, E03C 1/01

(54) **Procédé d'installation d'un équipement sanitaire**
Verfahren zum Einbau einer Sanitärausstattung
Method for installing sanitary equipment

(30) Priorité: 12.07.2012 FR 1201989
(43) Date de publication de la demande: 15.01.2014
(73) Titulaire: New Bath, 38340 Voreppe (FR)
(72) Inventeur: Aubourg, Désiré, 10150 Pont-Sainte-Marie (FR); Guzman, Jean-Charles, 10143 Rosières Près Troyes (FR)
(74) Mandataire: Hecké, Gérard

(56) Documents cités:
- DE-A1- 3 921 302

## Description

La présente invention concerne un procédé d'installation ou réalisation d'un équipement sanitaire du type baignoire ou douche, c'est-à-dire de soin du corps de l'utilisateur par l'eau, par exemple dans une salle d'eau.

Jusqu'à présent, pour installer un équipement sanitaire, du type baignoire ou douche, dans tout local, par exemple salles de bains, pourvu d'un sol apte à supporter la charge dudit équipement et de l'utilisateur, on procède de la manière suivante :
- on met en place ou dépose le récipient pour le recueil de l'eau, par exemple baignoire, ou bac, ou receveur de douche, sur le sol du local, à l'emplacement réservé ou affecté à l'équipement sanitaire ; ce récipient est en appui sur le sol par un ou plusieurs pieds convenablement disposés pour répartir au sol toute la charge de l'équipement sanitaire et de son utilisateur, souvent réglables en hauteur pour une mise à niveau horizontal du rebord supérieur externe dudit récipient ;
- puis, après mise en place du récipient, on procède à l'habillage de ce dernier, avec différents matériaux, selon différentes techniques, en sorte d'obtenir une surface continue, ou comblée, par exemple un tablier, entre, d'un côté le rebord supérieur externe du récipient, et de l'autre côté, le sol du local, à l'emplacement de l'équipement sanitaire, ainsi qu'avec le ou les autres éléments dudit local, tels que murs ou panneaux, l'objectif étant d'obtenir une intégration de l'équipement sanitaire, et de son récipient de recueil de l'eau, dans le décor ou l'environnement du local, par exemple la salle d'eau, affecté à l'équipement sanitaire.

Cet habillage requiert différents corps de métiers, et surtout représente une part significative du temps affecté à l'installation de l'équipement sanitaire ou du local sanitaire, avec un résultat pratique et/ou décoratif souvent aléatoire.

### Objet de l'invention

La présente invention a pour objet de remédier aux inconvénients précités.

L'invention a en particulier pour objet de simplifier et fiabiliser l'installation de tout équipement sanitaire, du type baignoire ou douche, comprenant un récipient de recueil de l'eau, qu'il s'agisse d'une baignoire ou d'un receveur, ou bac de douche.

Selon la présente invention on a découvert que certains matériaux composites rigides façonnables étaient adaptés, non seulement pour la réalisation de l'habillage du récipient de recueil de l'eau, tel que décrit ou défini précédemment, mais aussi pour obtenir un habillage capable de supporter, au moins en partie, la charge dudit récipient et de son utilisateur. Une plaque composite en soi est connue par example dans le document DE 39 21 302 A.

Les matériaux composites rigides façonnables, particuliers, retenus selon la présente invention sont des matériaux en plaque(s), comprenant une âme en matière plastique, de préférence thermoplastique, telle que le polyéthylène par exemple, et deux feuilles ou plaques d'aluminium, liées à et de part et d'autre de l'âme, l'une des plaques comportant une face externe décorative, c'est-à-dire traitée, par exemple avec un revêtement, pour assurer un aspect ou un décor.

De tels matériaux composites, quoiqu'ayant une faible épaisseur, possèdent une rigidité convenable, en particulier présentent une résistance mécanique intrinsèque dans toute direction passant par son âme, tout en demeurant façonnables à volonté.

Dès lors, en partant d'un matériau composite rigide façonnable tel que défini ou décrit précédemment, la présente invention a pour objet un procédé d'installation d'un équipement sanitaire, rompant avec la ou les pratique(s) précédemment décrite(s).

Un procédé selon l'invention d'installation d' un équipement sanitaire, du type baignoire ou douche, comprenant un récipient pour le recueil de l'eau, pourvu d'un rebord externe supérieur, dans un local pourvu d'un sol apte à supporter la charge dudit équipement et de son utilisateur, est caractérisé en ce que :
(a) on dispose du matériau composite rigide façonnable défini précédemment ;
(b) avant mise en place de l'équipement sanitaire, par façonnage du matériau composite rigide, indépendamment ou séparément du récipient de recueil de l'eau, baignoire par exemple, on réalise préalablement l'habillage final dudit équipement, en sorte que celui-ci soit apte à supporter au moins en partie la charge dudit équipement et de son utilisateur, ledit habillage étant réalisé avec la face externe décorative du matériau composite, à l'extérieur de l'habillage, et pour présenter un rebord supérieur d'accostage, ainsi qu'une surface continue reliant, d'un côté ledit rebord d'accostage, et de l'autre côté le sol à l'emplacement de l'équipement sanitaire ;
(c) on met d'abord en place l'habillage final sur le sol, à l'emplacement de l'équipement sanitaire, avec le rebord supérieur d'accostage dirigé vers le haut ; et
(d) après mise en place de l'habillage final sur le sol, adapté au récipient de recueil de l'eau et à son rebord supérieur externe, on dépose ledit récipient par le dessus de l'habillage, en sorte que le rebord supérieur externe dudit récipient vienne accoster le rebord supérieur de l'habillage.

En général, après dépose du récipient sur ou dans l'habillage, aucune autre opération supplémentaire d'habillage ou finition, autre que celle(s) requise(s) pour l'achèvement de l'équipement sanitaire, n'est effectuée.

Selon un mode d'exécution de l'invention, on réalise l'habillage final en plusieurs parties, individuellement façonnées, complémentaires l' une de l'autre, puis on assemble lesdites parties pour obtenir l'habillage final complet, présentant la surface continue requise pour relier, d'un côté le rebord d'accostage de l'habillage, et de l'autre côté le sol à l'emplacement de l'équipement sanitaire.

Comme dit précédemment, le récipient pour le recueil de l'eau est une baignoire, ou un bac ou receveur de douche.

L'invention propose également tout kit ou ensemble pour l'installation d'un équipement sanitaire, du type baignoire ou douche, comprenant :
- outre le récipient pour le recueil de l'eau, qu'il s'agisse d'une baignoire ou d'un receveur de douche ;
- le matériau composite rigide façonnable en plaque(s), défini ou décrit précédemment, par exemple prédécoupé ;
- et, le cas échéant, tous autres équipements ou accessoires requis pour l'installation complète de l'équipement sanitaire.

A l'instar de la menuiserie ou du travail des métaux, les opérations élémentaires de façonnage sont multiples et diverses, par exemple :
- la découpe des plaques, par exemple à la scie, avec, le cas échéant, mise en forme à froid, par exemple avec des gabarits,
- le cintrage à froid,
- le fraisage du matériau composite, par exemple selon une ligne de pliure,
- le pliage, l'assemblage d'éléments prédécoupés du matériau composite rigide, au moyen de diverses techniques telles que le vissage, le collage,
- tout usinage approprié.

L'objet du façonnage du matériau composite rigide à la base de la présente invention, c'est d'obtenir un habillage final du récipient de recueil de l'eau, voire de l'équipement sanitaire lui-même, en une seule partie, ou en plusieurs parties, qui une fois assemblées les unes aux autres, et/ou avec ledit récipient de recueil de l'eau, déterminent, aux joints près, une surface continue reliant, d'un côté le rebord d'accostage de l'habillage, et de l'autre côté le sol à l'emplacement de l'équipement sanitaire.

### Description sommaire des dessins

La présente invention est maintenant décrite par référence aux dessins annexés, dans lesquels :
- la figure 1 représente, en coupe transversale, un matériau composite rigide façonnable, retenu ou choisi selon l'invention pour l'installation d'un équipement sanitaire ;
- la figure 2 représente, à gauche en coupe transversale, et à droite en coupe longitudinale, un équipement sanitaire du type baignoire, une fois installé selon le procédé de l'invention ;
- la figure 3 représente, à gauche en coupe transversale, et à droite en coupe longitudinale, un équipement sanitaire du type douche, une fois installé selon le procédé de l'invention ;

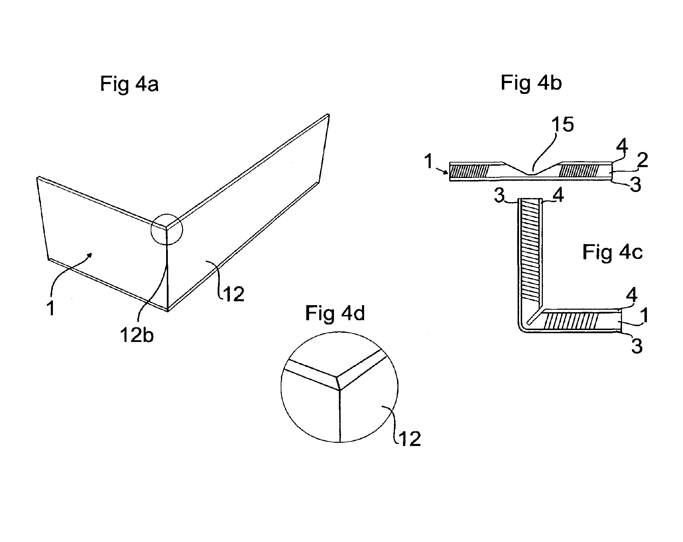

- la figure 4 représente, dans ses différentes phases ou opérations, l'obtention d'une partie ou de la totalité d'un habillage, présentant un angle saillant, obtenu avec le matériau défini précédemment, d'abord par fraisage selon figure 4b, puis par pliage selon figure 4c, le tout pour obtenir l'élément représenté à la figure 4a, avec un angle saillant selon figure 4d ;

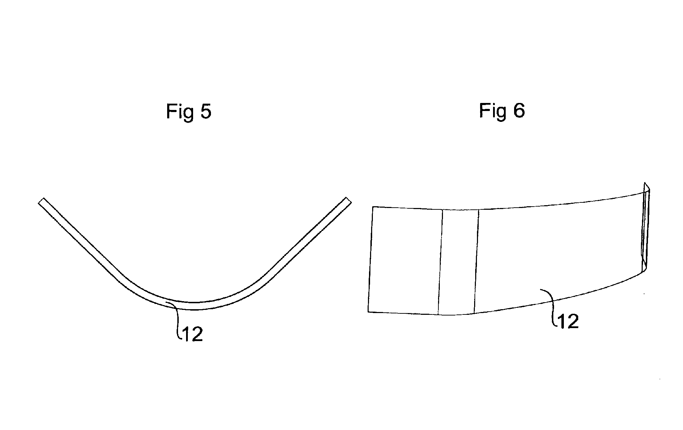

- les figures 5 et 6 représentent d'autres modes de façonnage, d'ouvrage ou travail du matériau composite rigide selon l'invention, par cintrage à froid selon figure 5, et par pliage et cintrage, toujours à froid, selon figure 6 ;
- les figures 7a à 7d représentent les différentes phases de réalisation d'un habillage final selon l'invention de la baignoire représentée installée à la figure 2, les figures 7a et 7b montrant la réalisation et l'assemblage de deux parties complémentaires de cet habillage, et les figures 7c et 7d montrant la mise en place sur le sol du local affecté à l'équipement sanitaire de l'habillage, avant la dépose de la baignoire ;
- les figures 8a et 8b représentent deux modes d'accostage du rebord supérieur externe de la baignoire avec le rebord d'accostage de l'habillage, l'un (cf fig. 8a) avec alignement, et l'autre (cf fig.8b) avec retrait de l'un par rapport à l'autre ;
- les figures 9a et 9b représentent l'une des transformations pouvant être apportées à un matériau composite rigide façonnable selon l'invention, par disposition de passages lumineux montrés sur la face extérieure selon figure 9a, et dans l'épaisseur du matériau selon figure 9b.

### Description détaillée de l'invention

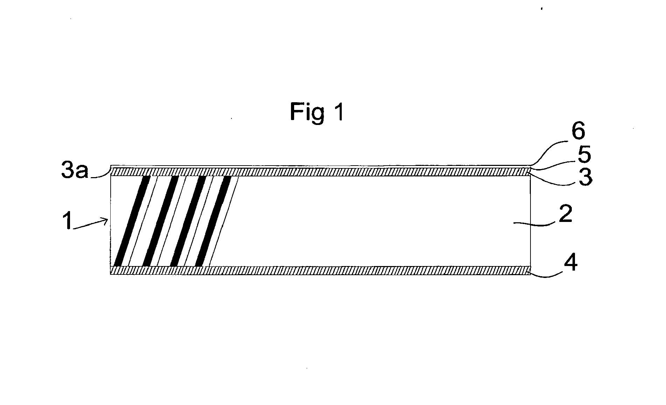

La présente invention a pour point de départ la découverte selon laquelle un matériau composite rigide façonnable, tel que décrit ou défini ci-après par référence à la figure 1, convient pour installer un équipement sanitaire, du type baignoire ou douche, en particulier en inversant l'ordre des opérations, c'est-à-dire en obtenant préalablement et séparément un habillage, qui sera l'habillage final, puis en déposant le récipient de recueil de l'eau dans l'habillage ainsi obtenu, ayant par lui-meme des propriétés ou une résistance mécanique lui permettant de supporter la charge du récipient et de l'utilisateur, au moins en partie.

Par référence à la figure 1, ce matériau composite rigide façonnable comprend une âme 2 en matière plastique, par exemple en polyéthylène basse pression.

Conformément à la figure 1, ce matériau 1 composite rigide façonnable comprend :
- une âme 2 en matière ou matériau plastique, par exemple en polyéthylène basse pression,
- une première feuille 3 d'aluminium, liée à l'un des côtés de l'âme, comportant du côté opposé une face externe 3a décorative, c'est-à-dire susceptible de recevoir un revêtement 5, tel que laque ou peinture, protégé temporairement par un film 6 plastique provisoire, pelable ,
- et une autre feuille 4 d'aluminium, liée de l'autre côté à l'âme 2.

De tels matériaux 1 sont offerts sur le marché, par exemple :
- sous la marque DIBOND®, par la Société 3A Composites, et
- la marque REYNOBOND, par la Société Alcoa Architectural Products.

Ces produits sont particulièrement intéressants dans le cadre de la présente invention, en ce qu'ils présentent une résistance mécanique intrinsèque dans toute direction passant par leur âme, tout en demeurant façonnables, comme décrit ci-après. Ils sont obtenus industriellement par extrusion de la matière plastique de l'ame 2, avec liaison chimique et mécanique immédiate des feuilles d'aluminium 3 et 4 sur l'ame extrudée.

Ces produits sont en général proposés sous différentes formes et dimensions, par exemple en plaque(s).

Les caractéristiques suivantes de ces matériaux sont particulièrement appropriées, séparément ou ensemble, pour la mise en oeuvre de l'invention :
- une épaisseur totale selon des valeurs allant de 2 mm à 6 mm et plus, avec des densités s'étalant de 2 à 8 kg/m²,
- des feuilles d'aluminium 3 et 4 ayant chacune une épaisseur entre 0,2 et 0,4 mm, par exemple de l'ordre de 0,3 mm,
- et une résistance à la flexion comprise entre 300 et 6000 kNcm²/m, préférentiellement entre 400 et 3500 kNcm2/m, avec un module d'élasticité de l'ordre de 70 000 N/mm².

Par ailleurs, s'agissant de l'âme 2, d'autres matériaux plastiques que le polyéthylène peuvent être envisagés, qu'il s'agisse de matériaux thermodurcissables ou thermoplastiques, tels que polycarbonate.

Ces matériaux sont non seulement rigides, mais ils sont aussi légers, et résistants aux températures et à la corrosion. Ils ne présentent aucune délamination, et pratiquement aucune déformation au cours du temps, grâce en particulier à leur faible dilatation thermique, ces caractéristiques supplémentaires les rendant particulièrement adaptés pour une utilisation dans un environnement soumis à températures et humidité, tel qu'une salle d'eau.

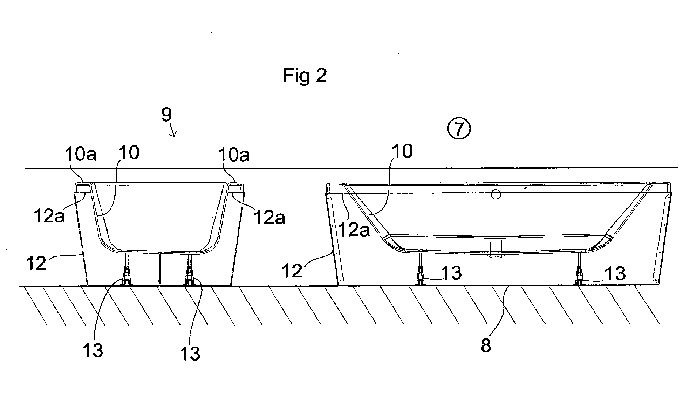

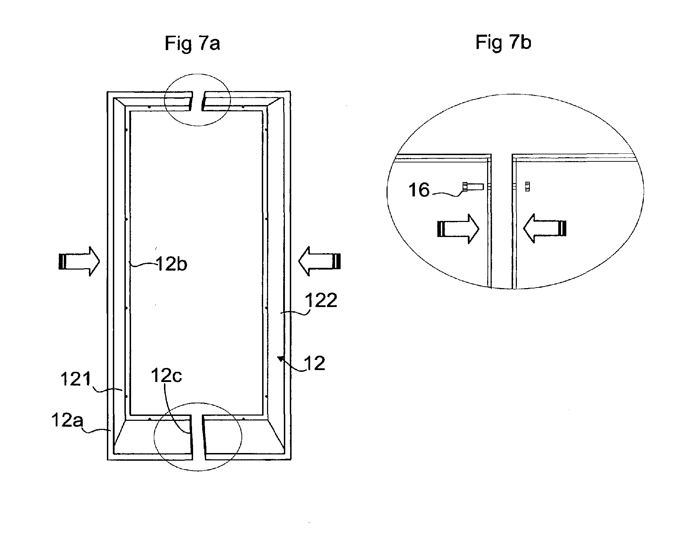

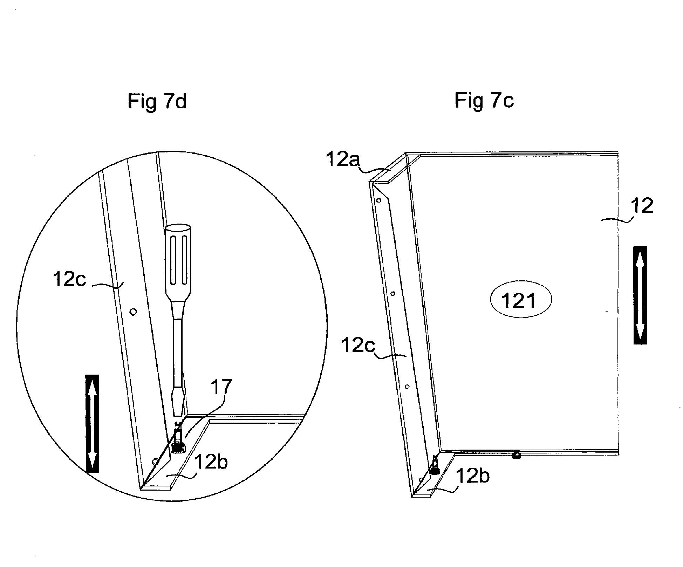

A titre d'exemple, par référence aux figures 2 et 7, on décrira ci-après l'utilisation d'un matériau composite rigide façonnable selon figure 1, pour obtenir un équipement sanitaire du type baignoire, installé par exemple en îlot, dans un local 7, du type salle d'eau, comportant un sol 8, apte à supporter la charge de l'équipement sanitaire et de son utilisateur.

Avant mise en place de l'équipement sanitaire 9, séparément et indépendamment de ce dernier, mais en se référant à la forme et aux dimensions du récipient de recueil de l'eau, en l'occurrence de la baignoire 10, on façonne le matériau 1 pour obtenir un habillage 12, représenté dans sa configuration montée ou finale à la figure 2.

Cet habillage final a la forme d'un tronc de pyramide inversée. Par façonnage de deux parties identiques, représentées séparées à la figure 7a, complémentaires l'une de l'autre, on obtient par assemblage avec des vis 16 selon figure 7b, l'habillage final désiré.

Chacune des parties 121 et 122 de l'habillage final comporte, après façonnage, un rebord supérieur 12a d'accostage, un rebord inférieur et intérieur 12b de montage sur le sol, ainsi que deux rebords transversaux 12c permettant l'assemblage des deux parties 121 et 122 avec des vis 16, comme montré à la figure 7b. Une fois les deux parties 121 et 122 assemblées, l'habillage final 12 présente une surface continue reliant, d'un côté le rebord d'accostage 12a, dont la forme et les dimensions sont par ailleurs adaptées ou similaires au rebord supérieur externe 10a du récipient 10 de recueil de l'eau, en l'occurrence de la baignoire, et de l'autre côté le sol 8, du côté du rebord inférieur 12b, à l'emplacement de l'équipement sanitaire 9 dans le local 7.

On met en place l'habillage final 12 ainsi obtenu sur le sol 8 à l'emplacement de l'équipement sanitaire 9, avec son rebord supérieur d'accostage 12a dirigé vers le haut. Grâce à des vis de réglage en hauteur 17, on peut ajuster le niveau et régler la hauteur de l'habillage final 12 par rapport au sol 8, comme montré aux figures 7c et 7d.

Après mise en place de l'habillage final 12 sur le sol 8, on dépose le récipient de recueil de l'eau, en l'occurrence la baignoire 10, par le dessus de l'habillage 12, en sorte que le rebord supérieur externe 10a de cette baignoire vienne accoster le rebord supérieur 12a de l'habillage 12.

On aboutit ainsi à l'installation représentée à la figure 2, étant observé que les pieds 13 de la baignoire 10, également réglés en hauteur, reprennent seulement une partie de la charge du récipient 10 et de l'utilisateur.

Après dépose du récipient 10 sur ou dans l'habillage 12, aucune autre opération d'habillage ou finition, autre que celles requises pour l'achèvement de l'équipement sanitaire 9, ne sont à effectuer.

Grâce à l'habillage 12, on obtient une surface continue pour relier, d'un côté le rebord d'accostage 12a de l'habillage, et de l'autre côté le sol 8 à l'emplacement de l'équipement sanitaire 9, aux joints près bien entendu. A cet égard, les joints peuvent pratiquement disparaître lorsque les deux parties 121 et 122 présentent chacune une section horizontale en L et sont assemblées selon deux angles de l'habillage final obliquement opposés.

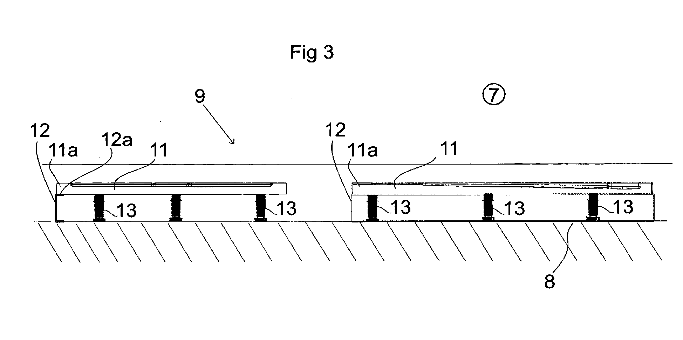

Le même principe d'installation peut être adopté, s'agissant d'un équipement sanitaire du type douche, comportant un bac ou receveur de douche 11, avec un rebord supérieur externe 11a, comme montré par la figure 3.

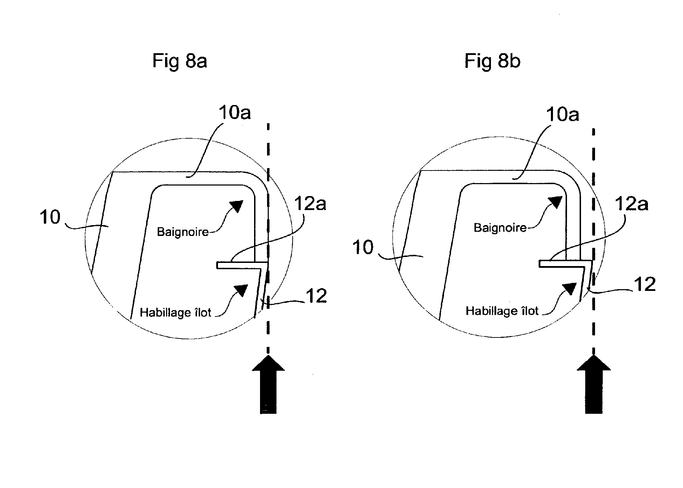

Comme montré par les figures 8a et 8b, s'agissant d'une baignoire, ou de tout autre récipient de recueil de l'eau, l'accostage entre le rebord supérieur 10a du récipient et le rebord d'accostage 12a de l'habillage 12 peut être, ou aligné selon figure 8a, ou en retrait selon figure 8b.

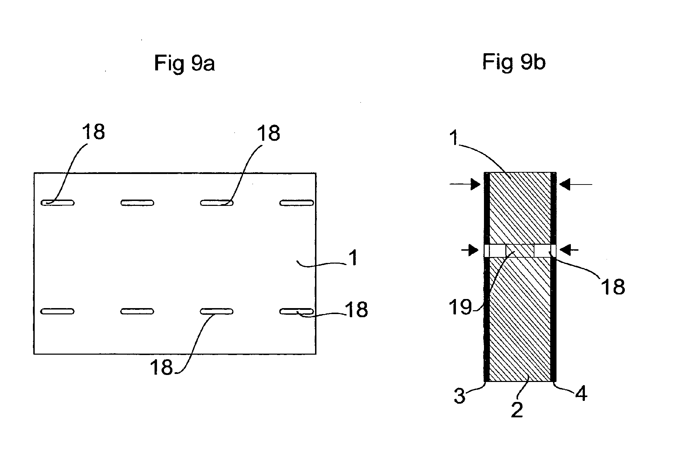

Le matériau composite rigide façonnable 1 selon la présente invention peut être lui-meme ouvré ou travaillé, non seulement pour faire partie de l'équipement sanitaire 9, mais aussi pour ajouter d'autres fonctions ou avantages décoratifs à l'habillage final. Comme montré par les figures 9a et 9b, différents passages 18, de forme oblongue, peuvent être ménagés au travers du matériau 1, pour traverser complètement ou non son âme 2 en matière plastique, mais traverser les deux plaques 3 et 4 d'aluminium, et permettre ainsi le passage de la lumière au travers du matériau 1, par exemple à partir d'une source lumineuse disposée à l'intérieur de l'habillage final 12.

## Revendications

1. Procédé d'installation d'un équipement sanitaire (9), du type baignoire ou douche, comprenant un récipient (10, 11) pour le recueil de l'eau, pourvu d'un rebord supérieur externe (10a, 11a), dans un local (7) pourvu d'un sol (8) apte à supporter la charge dudit équipement et de son utilisateur, le procédé comportant les séquences suivantes:
(a) on dispose d'un matériau composite rigide façonnable, à savoir d'un matériau (1) en plaque(s), comprenant une âme (2) en matière plastique, deux feuilles (3, 4) d'aluminium liées à et de part et d'autre de l'âme, l'une (3) des plaques comportant une face externe (3a) décorative, ledit matériau composite façonnable présentant une résistance mécanique intrinsèque dans toute direction passant par son âme ;
(b) avant mise en place de l'équipement sanitaire (9), par façonnage du matériau composite rigide (1), on réalise l'habillage final (12) dudit équipement, en sorte que celui-ci soit apte à supporter au moins en partie la charge dudit équipement et de son utilisateur, ledit habillage étant réalisé, avec la face externe décorative (3a) du matériau composite (1), à l'extérieur de l'habillage, et pour présenter un rebord supérieur d'accostage (12a), ainsi qu'une surface continue reliant, d'un côté ledit rebord d'accostage (12a), et de l'autre côté le sol (8) à l'emplacement de l'équipement sanitaire (9) ;
(c) on met en place l'habillage final (12) sur le sol (8), à l'emplacement de l'équipement sanitaire (9), avec le rebord supérieur d'accostage (12a) dirigé vers le haut ; et
(d) après mise en place de l'habillage final (12) sur le sol (8), on dépose le récipient (10, 11) de recueil de l'eau par le dessus de l'habillage, en sorte que le rebord supérieur (10a, 11a) dudit récipient vienne accoster le rebord supérieur (12a) de l'habillage (12).

2. Procédé selon la revendication 1, **caractérisé en ce que**, après dépose du récipient (10, 11) sur ou dans l'habillage (12), aucune autre opération d'habillage ou finition, autre que celle(s) requise(s) pour l'achèvement de l'équipement sanitaire (9), n'est effectuée.

3. Procédé selon la revendication 1, caractérisé en de que l'on réalise l'habillage final (12) en plusieurs parties (121, 122) individuellement façonnées, complémentaires l'une de l'autre, puis on assemble (16) lesdites parties pour obtenir l'habillage final complet, présentant la surface continue requise pour relier d'un côté le rebord d'accostage (12a) de l'habillage, et de l'autre côté le sol (8) à l'emplacement de l'équipement sanitaire (9).

4. Procédé selon la revendication 1, **caractérisé en ce que** le récipient pour le recueil de l'eau est une baignoire (10).

5. Procédé selon la revendication 1, **caractérisé en ce que** le récipient pour le recueil de l'eau est un bac de douche (11).

6. Kit pour l'installation d'un équipement sanitaire (9), du type baignoire ou douche, comprenant un récipient (10, 11) pour le recueil de l'eau, pourvu d'un rebord supérieur externe (10a, 11a), **caractérisé en ce qu'**il comprend en outre un matériau composite rigide façonnable, à savoir un matériau (1) en plaque(s) comprenant une âme (2) en matière plastique, deux plaques (3, 4) d'aluminium liées à et de part et d'autre de l'âme, l'une des plaques (3) comportant une face externe (3) décorative, ledit matériau composite façonnable présentant une résistance mécanique intrinsèque dans toute direction passant par son âme.

## Patentansprüche

1. Verfahren zum Installieren einer Sanitäreinrichtung (9) nach Art einer Badewanne oder Dusche, die einen Wasserauffangbehälter (10, 11) umfasst, der mit einem umgebogenen Außenrand (10a, 11a) versehen ist, in einem Raum (7), der mit einem Boden (8) versehen ist, der geeignet ist, die Last der genannten Einrichtung und seines Benutzers zu tragen, wobei das Verfahren folgende Schritte umfasst:
(a) Verwendung eines starren, formbaren Verbundmaterials, und zwar eines Materials (1) in Plattenform, das umfasst: einen Kern (2) aus Kunststoff, zwei Aluminiumplatten (3, 4), die mit dem Kern verbunden und beidseits desselben angeordnet sind, wobei eine der Platten eine dekorative Außenseite (3a) aufweist, welches formbare Verbundmaterial eine intrinsische mechanische Festigkeit in jeder Richtung hat, die durch seinen Kern führt;
(b) vor dem Einbau der sanitären Einrichtung (9) Herstellung der endgültigen Verkleidung (12) der genannten Einrichtung durch Formung des starren Verbundmaterials (1), und zwar so, dass diese geeignet ist, zumindest teilweise die Last der genannten Einrichtung und ihres Benutzers zu tragen, wobei die Verkleidung so ausgeführt ist, dass sich die dekorative Außenseite (3a) des Verbundmaterials (1) außerhalb der Verkleidung befindet, und dass eine obere umgebogene Kante (12a) zum Aneinanderfügen sowie eine durchgehende Fläche gebildet werden, die einerseits die umgebogene Kante (12a) zum Aneinanderfügen und andererseits den Boden (8) am Aufstellungsort der sanitären Einrichtung (9) miteinander verbindet;
(c) die endgültige Verkleidung (12) am Boden (8) am Aufstellungsort der sanitären Einrichtung (9) mit nach oben gerichteter oberer umgebogener Kante (12a) angeordnet wird; und
(d) nach dem Anbringen der endgültigen Verkleidung (12) am Boden (8) der Wasserauffangbehältor (10, 11) über den oberen Teil der Verkleidung angebracht wird, in der Weise, dass die obere umgebogene Kante (10a, 11a) des Behälters an die obere umgebogene Kante (12a) der Verkleidung (12) anliegt.

2. Verfahren nach Anspruch 1, **dadurch gekennzeichnet, dass** nach Montieren des Behälters (10, 11) auf oder in die Verkleidung (12) kein weiterer Verkleidungs- oder Endbearbeitungsschritt außer dem/denjenigen durchgeführt wird, der/die zur Fertigstellung der sanitären Einrichtung (9) erforderlich ist/sind.

3. Verfahren nach Anspruch 1, **dadurch gekennzeichnet, dass** die endgültige Verkleidung (12) aus mehreren, individuell geformten und zueinander komplementären Teilen (121, 122) besteht und dass anschließend (16) die genannten Teile zusammengefügt (16) werden, um die komplette endgültige Verkleidung zu bilden, die die durchgehende Fläche bilden, die erforderlich ist, um einerseits die umgebogene Kante zum Aneinanderfügen (12a) der Verkleidung und andererseits den Boden (8) am Aufstellungsort der sanitären Einrichtung (9) miteinander zu verbinden.

4. Verfahren nach Anspruch 1, **dadurch gekennzeichnet, dass** der Wasserauffangbehälter eine Badewanne (10) ist.

5. Verfahren nach Anspruch 1, **dadurch gekennzeichnet, dass** der Wasserauffangbehälter eine Duschwanne (11) ist.

6. Montagebausatz für eine sanitäre Einrichtung (9) nach Art einer Bade- oder Duschwanne, die einen Wasserauffangbehälter (10, 11) umfasst, der mit einer oberen umgebogenen Außenkante (10a, 11a) versehen ist, **dadurch gekennzeichnet, dass** er femer ein starres, formbares Verbundmaterial umfasst, und zwar ein Material (1) in Plattenform, das umfasst: einen Kern (2) aus Kunststoff, zwei Aluminiumplatten (3, 4), die mit dem Kern verbunden und beidseits desselben angeordnet sind, wobei eine der Platten (3) eine dekorative Außenseite (3a) aufweist, welches formbare Verbundmaterial eine intrinsische mechanische Festigkeit in jeder Richtung hat, die durch seinen Kern führt.

## Claims

1. A method for installing sanitary equipment (9), of bath or shower type, comprising a recipient (10, 11) for collecting the water, provided with an external top edge (10a, 11a), in a room (7) provided with a floor (8) able to support the weight of said equipment and of its user, the method comprising the following sequences:
(a) a shapeable rigid composite material, i.e. a material (1) in sheet form, comprising a body (2) made from plastic material, two aluminium sheets (3, 4) joined to and on each side of the body, one (3) of the plates comprising a decorative outside face (3a), said shapeable composite material presenting an intrinsic strength in any direction passing through its body,
(b) before installation of the sanitary equipment (9) is performed, by shaping of the rigid composite material (1), the final covering (12) of said equipment is made in such a way that the latter is able to at least partially support the weight of said equipment and of its user, said covering being achieved with the decorative outside face (3a) of the composite material (1) outside the covering, and to present a top flush-mounting rim (12a) and a continuous surface joining on the one side said flush-mounting rim (12a) and on the other side the floor (8) at the location where the sanitary equipment (9) is installed,
(c) the final covering (12) is fitted in place on the floor (8), at the location of the sanitary equipment (9), with the top flush-mounting rim (12a) facing upwards; and
(d) after the final covering (12) has been fitted in place on the floor (8), the water collection recipient (10, 11) is fitted over the top of the covering, so that the top rim (10a, 11a) of said recipient comes and fits in flush manner with the top rim (12a) of the covering (12).

2. The method according to claim 1, **characterized in that**, after the recipient (10, 11) has been fitted on or in the covering (12), no other covering or finishing operations other than that/those required for completion of the sanitary equipment (9) are performed.

3. The method according to claim 1, **characterized in that** the final covering (12) is executed in several individually shaped parts (121, 122), complementary to one another, said parts then being assembled (16) to obtain the complete final covering presenting the required continuous surface to join on the one side the flush-mounting rim (12a) of the covering and on the other side the floor (8) at the location of the sanitary equipment (9).

4. The method according to claim 1, **characterized in that** the water collection recipient is a bath (10).

5. The method according to claim 1, **characterized in that** the water collection recipient is a shower tray (11).

6. A kit for installation of sanitary equipment of bath or shower type, comprising a recipient (10, 11) for collecting the water, provided with an external top edge (10a, 11a), **characterized in that** it further comprises a shapeable rigid composite material, i.e. a material (1) in sheet form, comprising a body (2) made from plastic material, two aluminium sheets (3, 4) joined to and on each side of the body, one of the plates (3) comprising a decorative outside face (3a), said shapeable composite material presenting an intrinsic strength in any direction passing through its body.
